(19) **Europäisches Patentamt / European Patent Office / Office européen des brevets**

(11) **EP 4 235 862 B1**

(12) **EUROPEAN PATENT SPECIFICATION**

(45) Date of publication and mention of the grant of the patent:
**18.06.2025 Bulletin 2025/25**

(51) International Patent Classification (IPC):
$H01M\ 4/36^{(2006.01)}$    $H01M\ 4/525^{(2010.01)}$
$H01M\ 4/505^{(2010.01)}$    $H01M\ 10/052^{(2010.01)}$
$H01M\ 4/02^{(2006.01)}$

(21) Application number: **21911415.4**

(22) Date of filing: **17.12.2021**

(52) Cooperative Patent Classification (CPC):
**H01M 10/052; H01M 4/364; H01M 4/505; H01M 4/525;** H01M 2004/028; H01M 2220/20; Y02E 60/10

(86) International application number:
**PCT/KR2021/019306**

(87) International publication number:
**WO 2022/139348 (30.06.2022 Gazette 2022/26)**

(54) **CATHODE ACTIVE MATERIAL, AND CATHODE AND LITHIUM SECONDARY BATTERY COMPRISING SAME**

KATHODENAKTIVMATERIAL UND KATHODE UND LITHIUMSEKUNDÄRBATTERIE DAMIT

MATÉRIAU ACTIF DE CATHODE, ET CATHODE ET BATTERIE SECONDAIRE AU LITHIUM LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2020  KR 20200181727**

(43) Date of publication of application:
**30.08.2023  Bulletin 2023/35**

(73) Proprietor: **LG Energy Solution, Ltd.
Seoul 07335 (KR)**

(72) Inventors:
• **BAEK, So Ra**
  **Daejeon 34122 (KR)**
• **KIM, Hak Yoon**
  **Daejeon 34122 (KR)**
• **HUR, Hyuck**
  **Daejeon 34122 (KR)**
• **KIM, Dong Hwi**
  **Daejeon 34122 (KR)**
• **KIM, Hyeong Il**
  **Daejeon 34122 (KR)**
• **CHAE, Seul Ki**
  **Daejeon 34122 (KR)**
• **JUNG, Wang Mo**
  **Daejeon 34122 (KR)**
• **LEE, Dong Hun**
  **Daejeon 34122 (KR)**

(74) Representative: **Hoffmann Eitle
Patent- und Rechtsanwälte PartmbB
Arabellastraße 30
81925 München (DE)**

(56) References cited:
JP-A- 2003 109 593    JP-B2- 6 767 195
KR-A- 20170 063 373    KR-A- 20200 044 448
KR-A- 20200 059 164    KR-A- 20200 095 884
US-A1- 2020 388 830

**Description**

## TECHNICAL FIELD

The present invention relates to a positive electrode active material for a lithium secondary battery, and a positive electrode for a lithium secondary battery and a lithium secondary battery which include the positive electrode active material.

## BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal composite oxides have been used as a positive electrode active material of the lithium secondary battery, and, among these oxides, a lithium cobalt composite metal oxide, such as $LiCoO_2$, having a high operating voltage and excellent capacity characteristics has been mainly used. However, the $LiCoO_2$ has very poor thermal properties due to an unstable crystal structure caused by delithiation. Also, since the $LiCoO_2$ is expensive, there is a limitation in using a large amount of the $LiCoO_2$ as a power source for applications such as electric vehicles.

Lithium manganese composite metal oxides ($LiMnO_2$ or $LiMn_2O_4$), lithium iron phosphate compounds ($LiFePO_4$, etc.), or lithium nickel composite metal oxides ($LiNiO_2$, etc.) have been developed as materials for replacing the $LiCoO_2$. Among these materials, research and development of the lithium nickel composite metal oxides, in which a large capacity battery may be easily achieved due to a high reversible capacity of about 200 mAh/g, have been more actively conducted. However, the $LiNiO_2$ has limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the $LiNiO_2$, a lithium transition metal oxide, in which a portion of nickel (Ni) is substituted with cobalt (Co), manganese (Mn), or aluminum (Al), has been developed.

However, since the lithium transition metal oxide substituted with Co, Mn, or Al as described above still has poor thermal stability, there was a problem in that high-temperature life characteristics and high-temperature storage characteristics were poor when the lithium transition metal oxide was used in a battery.

Thus, there is a need to develop a positive electrode active material which may improve the high-temperature life characteristics and high-temperature storage characteristics of the lithium secondary battery by improving thermal stability.

KR 2020-0044448 A describes a positive electrode material for a secondary battery, which is a bimodal positive electrode material comprising a first positive electrode active material and a second positive electrode active material, which are a small particulate and a large particulate, respectively. The first positive electrode active material and the second positive electrode active material are lithium composite transition metal oxides containing nickel (Ni), cobalt (Co) and manganese (Mn) and made of single particles. In addition, a coating layer containing boron (B) is formed on the particle surfaces of the first positive electrode active material and the second positive electrode active material.

US 2020/388830 A1 describes a positive electrode active material for a secondary battery that includes a first positive electrode active material and a second positive electrode active material, wherein an average particle diameter (D50) of the first positive electrode active material is twice or more than an average particle diameter (D50) of the second positive electrode active material, and the second positive electrode active material has a crystallite size of 200 nm or more.

## DISCLOSURE OF THE INVENTION

## TECHNICAL PROBLEM

An aspect of the present invention provides a positive electrode active material which may improve high-temperature life characteristics and high-temperature storage characteristics of a lithium secondary battery, and a positive electrode for a lithium secondary battery and a lithium secondary battery which include the positive electrode active material.

## TECHNICAL SOLUTION

According to an aspect of the present invention, there is provided a bimodal positive electrode active material including a first lithium transition metal oxide and a second lithium transition metal oxide having an average particle diameter ($D_{50}$) smaller than that of the first lithium transition metal oxide, wherein the first lithium transition metal oxide has higher particle strength and smaller crystalline size than the second lithium transition metal oxide, and wherein the first lithium transition metal oxide and the second lithium transition metal oxide each independently have a composition represented by Formula 1 described below.

According to another aspect of the present invention, there is provided a positive electrode including the bimodal positive electrode active material.

According to another aspect of the present invention, there is provided a lithium secondary battery including the positive electrode.

## ADVANTAGEOUS EFFECTS

Since the positive electrode active material according to the present invention includes two types of lithium transition metal oxides having different average particle diameters, particle strengths, and crystalline sizes, the positive electrode active material may improve electrode density when used in a positive electrode for a secondary battery, may minimize particle breakage, and may improve high-temperature life characteristics and high-temperature storage characteristics of the battery when used in the secondary battery.

Accordingly, the positive electrode active material according to the present invention may be suitably used in a battery requiring high energy density, high stability, and long life characteristics, for example, a battery for an automobile.

## MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present specification, the term 'particle' refers to a granule of a micro unit. If it is observed by further enlargement, a separated region in the form in which atoms form a lattice structure in a predetermined direction may be identified, and this is called a 'crystalline'. A size of the particle observed by X-ray diffraction (XRD) is defined as a crystalline size. The crystalline size may be obtained by the Rietveld method using XRD data. Specifically, a sample is put in a central groove of a holder for general powder, a surface of the sample is leveled using a slide glass, a sample height is allowed to be matched an edge of the holder at the same time, and the crystalline size may then be obtained as an average crystalline size in which XRD data measured using an X-ray diffraction analyzer (Bruker Corporation, D8 Endeavor) ($2\theta=15°$ to $90°$, step size=$0.02°$, total scan time: 20min.) are analyzed through Fundamental Parameter Approach built into a Bruker's TOPAS program based on the Rietveld method.

With respect to particle strength in this specification, after the particles were put on a plate, a force when the particles were broken was measured while increasing a compressive force using a Micro Compression Testing Machine (Shimadzu Corporation, MCT-W500),and the force was defined as a particle strength value. Specifically, in the present specification, the particle strength was measured as an average value for 20 particles.

In the present specification, the expression "average particle diameter ($D_{50}$)"may be defined as a particle diameter at a cumulative volume of 50% in a particle size distribution curve. The average particle diameter ($D_{50}$), for example, may be measured by using a laser diffraction method, and, specifically, after a lithium composite transition metal oxide is dispersed in a dispersion medium, the dispersion medium is introduced into a commercial laser diffraction particle size measurement instrument (e.g., Microtrac Mt 3000)and irradiated with ultrasonic waves having a frequency of about 28 kHz and an output of 60 W, and the average particle diameter ($D_{50}$) at the cumulative volume of 50% may then be calculated by the measurement instrument.

The present inventors have found that, in a bimodal positive electrode active material including a first lithium transition metal oxide and a second lithium transition metal oxide having an average particle diameter ($D_{50}$) smaller than that of the first lithium transition metal oxide, in a case in which particle strength of the first lithium transition metal oxide is higher than particle strength of the second lithium transition metal oxide and a crystalline size of the first lithium transition metal oxide is smaller than a crystalline size of the second lithium transition metal oxide, electrode density may be improved when the positive electrode active material is used in a positive electrode for a secondary battery, particle breakage may be minimized, and high-temperature life characteristics and high-temperature storage characteristics of a battery may be improved when the positive electrode active material is used in the secondary battery, thereby leading to the completion of the present invention.

## Positive Electrode Active Material

The positive electrode active material according to the present invention is a bimodal positive electrode active material including a first lithium transition metal oxide and a second lithium transition metal oxide having an average particle diameter ($D_{50}$) smaller than that of the first lithium transition metal oxide, wherein the first lithium transition metal oxide has higher particle strength and smaller crystalline size than the second lithium transition metal oxide, and wherein the first lithium transition metal oxide and the second lithium transition metal oxide each independently have a composition represented by Formula 1 described below.

Since the particle strength of the first lithium transition metal oxide (hereinafter, a large particle) included in the bimodal positive electrode active material is higher than the particle strength of the second lithium transition metal oxide (hereinafter, a small particle), there is an advantage in that particle breakage of the large particle during rolling of an electrode may be minimized and a high-density electrode may be achieved.

In addition, since the crystalline size of the large particle is smaller than the crystalline size of the small particle, occurrence of cracks in the particle may be minimized by minimizing a volume change due to charge and discharge when the bimodal positive electrode active material is used in a secondary battery.

Also, since the crystalline size of the small particle is larger than the crystalline size of the large particle, a size of fine powder generated when breakage of the small particle occurs during rolling of the electrode may be controlled to be large, and thus, an increase in specific surface area may be suppressed.

As a result, since the positive electrode active material according to the present invention includes two types of the lithium transition metal oxides having different average particle diameters, particle strengths, and crystalline sizes, the positive electrode active material may improve electrode density when used in a positive electrode for a secondary battery, may minimize particle breakage, and may improve high-temperature life characteristics and high-temperature storage characteristics of the battery when used in the secondary battery.

According to the present invention, the first lithium transition metal oxide and the second lithium transition metal oxide each independently have a composition represented by Formula 1 below:

$$[\text{Formula 1}] \qquad Li_xNi_aCo_bM^1_cM_dO_2$$

In Formula 1,

$M^1$ is at least one selected from manganese (Mn) and aluminum (Al),

$M^2$ is at least one selected from tungsten (W), copper (Cu), iron (Fe), vanadium (V), chromium (Cr),titanium (Ti), zirconium (Zr), zinc (Zn), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), and

$$0.9{\leq}x{\leq}1.2, \ 0.7{\leq}a<1.0, \ 0<b<0.3, \ 0<c<0.3, \ \text{and} \ 0{\leq}d{\leq}0.1.$$

x represents an atomic ratio of lithium in the lithium transition metal oxide, wherein x may satisfy $1.0{\leq}x{\leq}1.2$ or $1.0{\leq}x{\leq}1.15$.

a represents an atomic ratio of nickel among total transition metals in the lithium transition metal oxide, wherein a may satisfy $0.8{\leq}a<1$ or $0.85{\leq}a<1$.

b represents an atomic ratio of cobalt among the total transition metals in the lithium transition metal oxide, wherein b may satisfy $0<b<0.2$ or $0<b<0.15$.

c represents an atomic ratio of $M^1$ among the total transition metals in the lithium transition metal oxide, wherein c may satisfy $0<c<0.2$ or $0<c<0.15$.

d represents an atomic ratio of $M^2$ among the total transition metals in the lithium transition metal oxide, wherein d may satisfy $0{\leq}d{\leq}0.05$ or $0{\leq}d{\leq}0.02$.

The bimodal positive electrode active material may include the first lithium transition metal oxide and the second lithium transition metal oxide in a weight ratio of 60:40 to 95:5, for example, 70:30 to 90:10. In a case in which the first lithium transition metal oxide and the second lithium transition metal oxide are included within the above weight ratio range, packing density of the particles may be increased, and, as a result, capacity of the battery may be increased when used in the battery.

According to the present invention, a difference in the particle strength between the first lithium transition metal oxide and the second lithium transition metal oxide may be in a range of 50 MPa to 200 MPa, for example, 70 MPa to 200 MPa. In a case in which the difference in the particle strength between the first lithium transition metal oxide and the second lithium transition metal oxide is within the above range, since the first lithium transition metal oxide and the second lithium transition metal oxide collide during the rolling of the electrode to fill a space between the first lithium transition metal oxide particles while breakage of the second lithium transition metal oxide occurs, high density of the electrode may be achieved. Also, since the breakage of the first lithium transition metal oxide is minimized during the rolling of the electrode, a resistance increase rate of the battery may be reduced, and high-temperature life performance may be improved.

According to the present invention, a difference in the crystalline size between the first lithium transition metal oxide and the second lithium transition metal oxide may be in a range of 50 nm to 150 nm, for example, 50 nm to 100 nm. In a case in which the difference in the crystalline size between the first lithium transition metal oxide and the second lithium transition metal oxide is within the above range, cracks formed in the particle may be reduced by minimizing a volume change experienced by the first lithium transition metal oxide during charge and discharge, and an increase in resistance may be reduced by minimizing a specific surface area of the second lithium transition metal oxide.

Particularly, in a case in which the difference in the particle strength between the first lithium transition metal oxide and the second lithium transition metal oxide is within the above range and the difference in the crystalline size is within the above range, even if breakage occurs, the breakage occurs in the second lithium transition metal oxide, and, in this case, the increase in the specific surface area may be suppressed due to a large size of the fine powder generated, the particle breakage of the first lithium transition metal oxide may be minimized, the cracks in the particle due to the volume change may be minimized, and, as a result, a synergistic effect occurs in which degradation of the high-temperature life characteristics and high-temperature storage characteristics of the battery is prevented.

According to the present invention, the first lithium transition metal oxide may have a particle strength of 130 MPa to 300 MPa, particularly 150 MPa to 280 MPa, and more particularly 180 MPa to 280 MPa. In a case in which the particle strength of the first lithium transition metal oxide is within the above range, the resistance increase rate of the battery may be reduced by minimizing the breakage of the first lithium transition metal oxide during the rolling of the electrode.

According to the present invention, the second lithium transition metal oxide may have a particle strength of 70 MPa to 125 MPa, particularly 70 MPa to 115 MPa, and more particularly 70 MPa to 115 MPa. In a case in which the particle strength of the second lithium transition metal oxide is within the above range, even if the breakage of the second lithium transition metal oxide occurs by collision of the first lithium transition metal oxide with the second lithium transition metal oxide during the rolling of the electrode, an amount of the fine powder generated may be small.

According to the present invention, the first lithium transition metal oxide may have a crystalline size of 80 nm to 140 nm, particularly 80 nm to 130 nm, and more particularly 80 nm to 120 nm. In a case in which the crystalline size of the first lithium transition metal oxide is within the above range, the cracks formed in the particle may be reduced by minimizing the volume change experienced by the first lithium transition metal oxide during charge and discharge.

According to the present invention, the second lithium transition metal oxide may have a crystalline size of 150 nm to 200 nm, particularly 150 nm to 190 nm, and more particularly 155 nm to 185 nm. In a case in which the crystalline size of the second lithium transition metal oxide is within the above range, since the size of the fine powder generated is large even if the breakage of the second lithium transition metal oxide occurs by the collision of the first lithium transition metal oxide with the second lithium transition metal oxide during the rolling of the electrode, the increase in the specific surface area may be suppressed.

The first lithium transition metal oxide may have an average particle diameter ($D_{50}$) of 8 $\mu$m to 20 $\mu$m, for example, 9 $\mu$m to 16 $\mu$m. Also, the second lithium transition metal oxide may have an average particle diameter ($D_{50}$) of 2 $\mu$m to 7 $\mu$m, for example, 3 $\mu$m to 6 $\mu$m. A difference in the average particle diameter ($D_{50}$) between the first lithium transition metal oxide and the second lithium transition metal oxide may be in a range of 1 $\mu$m to 18 $\mu$m, for example, 3 $\mu$m to 13 $\mu$m. In a case in which the average particle diameters ($D_{50}$) of the first lithium transition metal oxide and the second lithium transition metal oxide are respectively within the above ranges, since the second lithium transition metal oxide is appropriately distributed between the first lithium transition metal oxide, a packing ratio may be excellent.

## Positive Electrode

Also, the present invention provides a positive electrode for a lithium secondary battery which includes the above bimodal positive electrode active material. Specifically, the positive electrode for a lithium secondary battery includes a positive electrode current collector and a positive electrode active material layer formed on the positive electrode current collector, wherein the positive electrode active material layer includes the positive electrode active material according to the present invention.

In this case, since the positive electrode active material is the same as described above, detailed descriptions thereof will be omitted, and the remaining configurations will be only described in detail below.

The positive electrode current collector may include a metal having high conductivity, and is not particularly limited as long as it has no reactivity in a voltage range of the battery and the positive electrode active material layer is easily adhered thereto. As the positive electrode current collector, for example, stainless steel, aluminum, nickel, titanium, fired carbon, or aluminum or stainless steel that is surface-treated with one of carbon, nickel, titanium, silver, or the like may be used. Also, the positive electrode current collector may typically have a thickness of 3 $\mu$m to 500 $\mu$m, and microscopic

irregularities may be formed on the surface of the current collector to improve the adhesion of the positive electrode active material. The positive electrode current collector, for example, may be used in various shapes such as that of a film, a sheet, a foil, a net, a porous body, a foam body, a non-woven fabric body, and the like.

The positive electrode active material layer may optionally include a conductive agent, a binder, and a dispersant in addition to the positive electrode active material, if necessary.

In this case, the positive electrode active material may be included in an amount of 80 wt% to 99 wt%, for example, 85 wt% to 98.5 wt% based on a total weight of the positive electrode active material layer. When the positive electrode active material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.1 wt% to 15 wt% based on the total weight of the positive electrode active material layer.

The binder improves the adhesion between positive electrode active material particles and the adhesion between the positive electrode active material and the current collector. Specific examples of the binder may be polyvinylidene fluoride (PVDF),polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca),or various copolymers thereof, and any one thereof or a mixture of two or more thereof may be used. The binder may be included in an amount of 0.1 wt% to 15 wt% based on the total weight of the positive electrode active material layer.

The dispersant may include an aqueous dispersant or an organic dispersant such as N-methyl-2-pyrrolidone.

The positive electrode may be prepared according to a typical method of preparing a positive electrode except that the above-described positive electrode active material is used. Specifically, a composition for forming a positive electrode active material layer, which is prepared by dissolving or dispersing the positive electrode active material as well as optionally the binder, the conductive agent, and the dispersant, if necessary, in a solvent, is coated on the positive electrode collector, and the positive electrode may then be prepared by drying and rolling the coated positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode current collector.

## Secondary Battery

Furthermore, the present invention provides a lithium secondary battery including the above positive electrode.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

The lithium secondary battery may further optionally include a battery container accommodating an electrode assembly of the positive electrode, the negative electrode, and the separator, and a sealing member sealing the battery container.

In the lithium secondary battery, the negative electrode includes a negative electrode current collector and a negative electrode active material layer disposed on the negative electrode current collector.

The negative electrode current collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode current collector may typically have a thickness of 3 $\mu$m to 500 $\mu$m, and, similar to the positive electrode current collector, microscopic irregularities may be formed on the surface of the current collector to improve the adhesion of a negative electrode active material. The negative electrode current collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic material alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiO_\beta$ ($0<\beta<2$), $SnO_2$, vanadium oxide, and lithium vanadium oxide; or a composite including the metallic material and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt% based on a total weight of the negative electrode active material layer.

The binder is a component that assists in the binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be included in an amount of 10 wt% or less, for example, 5 wt% or less based on the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

The negative electrode active material layer may be prepared by coating a composition for forming a negative electrode active material layer, which is prepared by dissolving or dispersing optionally the binder and the conductive agent as well as the negative electrode active material in a solvent, on the negative electrode current collector and drying the coated negative electrode current collector, or may be prepared by casting the composition for forming a negative electrode active material layer on a separate support and then laminating a film separated from the support on the negative electrode current collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\epsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used. In this case, performance of an electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, an anion of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further added to the electrolyte in addition to the electrolyte components. In this case, the additive may be included in an amount of 0.1 wt% to 5 wt% based on a total weight of the electrolyte.

As described above, since the lithium secondary battery including the positive electrode active material according to the present invention exhibits excellent discharge capacity, output characteristics, and life characteristics, particularly, excellent high-temperature life characteristics and high-temperature storage characteristics, the lithium secondary battery is suitable for portable devices, such as mobile phones, notebook computers, and digital cameras, and electric cars such as hybrid electric vehicles (HEVs).

Thus, a battery module including the lithium secondary battery as a unit cell and a battery pack including the battery module may be provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Examples of the medium and large sized device may be an electric vehicle, a hybrid electric vehicle, a plug-in hybrid electric vehicle, and a power storage system, but the medium and large sized device is not limited thereto.

Hereinafter, the present invention will be described in detail, according to specific examples.

## Examples and Comparative Examples

### Example 1

A precursor having a composition represented by $Ni_{0.8}Co_{0.1}Mn_{0.1}(OH)_2$ and $LiOH \cdot H_2O$ were mixed such that a molar ratio of (Ni+Co+Mn) :Li was 1:1.02, and a heat treatment was performed at 750°C for 27 hours in an oxygen atmosphere to prepare a first lithium transition metal oxide having a particle strength of 185 MPa and a crystalline size of 107 nm. The first lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the

secondary particle was 13 $\mu$m.

A precursor having a composition represented by $Ni_{0.8}Co_{0.1}Mn_{0.1}(OH)_2$ and $LiOH \cdot H_2O$ were mixed such that a molar ratio of (Ni+Co+Mn):Li was 1:1.02, and a heat treatment was performed at 780°C for 25 hours in an oxygen atmosphere to prepare a second lithium transition metal oxide having a particle strength of 111 MPa and a crystalline size of 160 nm. The second lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the secondary particle was 3 $\mu$m.

The first lithium transition metal oxide and the second lithium transition metal oxide were mixed in a weight ratio of 75:25 to prepare a bimodal positive electrode active material.

## Example 2

A precursor having a composition represented by $Ni_{0.8}Co_{0.1}Mn_{0.1}(OH)_2$ and $LiOH \cdot H_2O$ were mixed such that a molar ratio of (Ni+Co+Mn):Li was 1:1.02, and a heat treatment was performed at 750°C for 32 hours in an oxygen atmosphere to prepare a first lithium transition metal oxide having a particle strength of 271 MPa and a crystalline size of 110 nm. The first lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the secondary particle was 13 $\mu$m.

A precursor having a composition represented by $Ni_{0.8}Co_{0.1}Mn_{0.1}(OH)_2$ and $LiOH \cdot H_2O$ were mixed such that a molar ratio of (Ni+Co+Mn):Li was 1:1.02, and a heat treatment was performed at 780°C for 21 hours in an oxygen atmosphere to prepare a second lithium transition metal oxide having a particle strength of 73 MPa and a crystalline size of 165 nm. The second lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the secondary particle was 3 $\mu$m.

The first lithium transition metal oxide and the second lithium transition metal oxide were mixed in a weight ratio of 75:25 to prepare a bimodal positive electrode active material.

## Example 3

A precursor having a composition represented by $Ni_{0.8}Co_{0.1}Mn_{0.1}(OH)_2$ and $LiOH \cdot H_2O$ were mixed such that a molar ratio of (Ni+Co+Mn):Li was 1:1.02, and a heat treatment was performed at 720°C for 28 hours in an oxygen atmosphere to prepare a first lithium transition metal oxide having a particle strength of 205 MPa and a crystalline size of 83 nm. The first lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the secondary particle was 13 $\mu$m.

A precursor having a composition represented by $Ni_{0.8}Co_{0.1}Mn_{0.1}(OH)_2$ and $LiOH \cdot H_2O$ were mixed such that a molar ratio of (Ni+Co+Mn):Li was 1:1.02, and a heat treatment was performed at 790°C for 24 hours in an oxygen atmosphere to prepare a second lithium transition metal oxide having a particle strength of 108 MPa and a crystalline size of 181 nm. The second lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the secondary particle was 3 $\mu$m.

The first lithium transition metal oxide and the second lithium transition metal oxide were mixed in a weight ratio of 75:25 to prepare a bimodal positive electrode active material.

## Comparative Example 1

A precursor having a composition represented by $Ni_{0.8}Co_{0.1}Mn_{0.1}(OH)_2$ and $LiOH \cdot H_2O$ were mixed such that a molar ratio of (Ni+Co+Mn):Li was 1:1.02, and a heat treatment was performed at 780°C for 27 hours in an oxygen atmosphere to prepare a first lithium transition metal oxide having a particle strength of 193 MPa and a crystalline size of 161 nm. The first lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the secondary particle was 13 $\mu$m.

A precursor having a composition represented by $Ni_{0.8}Co_{0.1}Mn_{0.1}(OH)_2$ and $LiOH \cdot H_2O$ were mixed such that a molar ratio of (Ni+Co+Mn) :Li was 1:1.02, and a heat treatment was performed at 750°C for 25 hours in an oxygen atmosphere to prepare a second lithium transition metal oxide having a particle strength of 115 MPa and a crystalline size of 132 nm. The second lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the secondary particle was 3 $\mu$m.

The first lithium transition metal oxide and the second lithium transition metal oxide were mixed in a weight ratio of 75:25 to prepare a bimodal positive electrode active material.

**Comparative Example 2**

A precursor having a composition represented by $Ni_{0.8}Co_{0.1}Mn_{0.1}(OH)_2$ and $LiOH \cdot H_2O$ were mixed such that a molar ratio of (Ni+Co+Mn) :Li was 1:1.02, and a heat treatment was performed at 760°C for 23 hours in an oxygen atmosphere to prepare a first lithium transition metal oxide having a particle strength of 110 MPa and a crystalline size of 123 nm. The first lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the secondary particle was 13 $\mu$m.

A precursor having a composition represented by $Ni_{0.8}Co_{0.1}Mn_{0.1}(OH)_2$ and $LiOH \cdot H_2O$ were mixed such that a molar ratio of (Ni+Co+Mn):Li was 1:1.02, and a heat treatment was performed at 790°C for 29 hours in an oxygen atmosphere to prepare a second lithium transition metal oxide having a particle strength of 151 MPa and a crystalline size of 171 nm. The second lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the secondary particle was 13 $\mu$m.

The first lithium transition metal oxide and the second lithium transition metal oxide were mixed in a weight ratio of 75:25 to prepare a bimodal positive electrode active material.

**Comparative Example 3**

A precursor having a composition represented by $Ni_{0.8}Co_{0.1}Mn_{0.1}(OH)_2$ and $LiOH \cdot H_2O$ were mixed such that a molar ratio of (Ni+Co+Mn):Li was 1:1.02, and a heat treatment was performed at 775°C for 21 hours in an oxygen atmosphere to prepare a first lithium transition metal oxide having a particle strength of 95 MPa and a crystalline size of 153 nm. The first lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the secondary particle was 13 $\mu$m.

A precursor having a composition represented by $Ni_{0.8}Co_{0.1}Mn_{0.1}(OH)_2$ and $LiOH \cdot H_2O$ were mixed such that a molar ratio of (Ni+Co+Mn) :Li was 1:1.02, and a heat treatment was performed at 730°C for 29 hours in an oxygen atmosphere to prepare a second lithium transition metal oxide having a particle strength of 158 MPa and a crystalline size of 118 nm. The second lithium transition metal oxide had a composition represented by $Li_{1.0}Ni_{0.8}Co_{0.1}Mn_{0.1}O_2$ and was in the form of a secondary particle in which primary particles were aggregated, wherein an average particle diameter ($D_{50}$) of the secondary particle was 3 $\mu$m.

The first lithium transition metal oxide and the second lithium transition metal oxide were mixed in a weight ratio of 75:25 to prepare a bimodal positive electrode active material.

The particle strengths and crystalline sizes of the first lithium transition metal oxides and the second lithium transition metal oxides, which were used in Examples 1 to 3 and Comparative Examples 1 to 3, are presented in Table 1 below.

[Table 1]

| | Particle strength (MPa) | | Crystalline size (nm) | |
|---|---|---|---|---|
| | First lithium transition metal oxide | Second lithium transition metal oxide | First lithium transition metal oxide | Second lithium transition metal oxide |
| Example 1 | 185 | 111 | 107 | 160 |
| Example 2 | 271 | 73 | 110 | 165 |
| Example 3 | 205 | 108 | 83 | 181 |
| Comparative Example 1 | 193 | 115 | 161 | 132 |
| Comparative Example 2 | 110 | 151 | 123 | 171 |
| Comparative Example 3 | 95 | 158 | 153 | 118 |

**Experimental Examples**

**Experimental Example** 1: **Evaluation** of **Change in Average Particle Diameter of the First Lithium Transition Metal Oxide According to Electrode Rolling**

Each of the bimodal positive electrode active materials respectively prepared in Examples 1 to 3 and Comparative Examples 1 to 3, a carbon black conductive agent, and a PVdF binder were mixed in an N-methyl-2-pyrrolidone (NMP) solvent at a weight ratio of 95:2:3 to prepare a positive electrode slurry. One surface of an aluminum current collector was coated with the positive electrode slurry, and dried to prepare an electrode before rolling.

The electrode before rolling was rolled such that density of the electrode became 3.15 g/cm$^2$ to prepare an electrode after rolling.

After the electrode before rolling and the electrode after rolling were sintered at 600°C for 3 hours in the air atmosphere to remove the conductive agent and the binder in the electrodes, only positive electrode active material particles were collected to measure each particle size distribution, and a difference in average particle diameter ($D_{50}$) of the first lithium transition metal oxide before and after electrode rolling is presented in Table 2 below.

[Table 2]

|  | Difference in average particle diameter ($D_{50}$) of the first lithium transition metal oxide before and after electrode rolling ($\mu$m) |
|---|---|
| Example 1 | 0.8 |
| Example 2 | 0.5 |
| Example 3 | 0.7 |
| Comparative Example 1 | 0.9 |
| Comparative Example 2 | 1.3 |
| Comparative Example 3 | 1.7 |

Since each of the first lithium transition metal oxides included in the bimodal positive electrode active materials of Examples 1 to 3 had a higher particle strength than each of the second lithium transition metal oxides included in the bimodal positive electrode active materials of Examples 1 to 3, particle breakage hardly occurred during electrode rolling, and thus, it may be confirmed that changes in the average particle diameter of the particles before and after electrode rolling were smaller than those of Comparative Examples 2 and 3.

**Experimental Example 2: Evaluation of High-temperature Life and Storage Performance of Battery**

Each of the bimodal positive electrode active materials respectively prepared in Examples 1 to 3 and Comparative Examples 1 to 3, a carbon black conductive agent, and a PVdF binder were mixed in an N-methyl-2-pyrrolidone (NMP) solvent at a weight ratio of 95:2:3 to prepare a positive electrode slurry. One surface of an aluminum current collector was coated with the positive electrode slurry, dried, and then roll-pressed to prepare a positive electrode.

Then, a negative electrode active material (graphite), a carbon black conductive agent, and a PVdF binder were mixed in water ($H_2O$) at a weight ratio of 95:1:4to prepare a negative electrode slurry. One surface of a copper current collector was coated with the negative electrode slurry, dried, and then roll-pressed to prepare a negative electrode.

Each lithium secondary battery was prepared by preparing an electrode assembly by disposing a separator between the positive electrode and the negative electrode, disposing the electrode assembly in a battery case, and then injecting an electrolyte solution. In this case, as the electrolyte solution, an electrolyte solution was used in which 2 wt% of vinylene carbonate (VC) and 1 M $LiPF_6$ were dissolved in an organic solvent in which ethylene carbonate:ethylmethyl carbonate:diethyl carbonate were mixed in a volume ratio of 3:3:4.

Then, each of the secondary batteries was charged at a constant current of 0.5 C to 4.2 V at 45°C. Thereafter, each secondary battery was discharged at a constant current of 0.5 C to 2.5 V. The above charging and discharging behaviors were set as one cycle, and, after this cycle was repeated 100 times, a ratio of 100$^{th}$cycle capacity to 1$^{st}$cycle capacity was defined as a capacity retention and the capacity retentions are presented in Table 3 below. Also, a ratio of a DCIR value, which was obtained by dividing a voltage drop ($\Delta$V) for 60 seconds in a 100$^{th}$ discharge cycle by the current, to a DCIR value, which was obtained by dividing a voltage drop ($\Delta$V) for 60 seconds in a 1$^{st}$ discharge cycle by the current, was defined as a resistance increase rate and the resistance increase rates are presented in Table 3 below.

Additionally, an initial reference performance test (RPT) was performed for each of the secondary batteries, an amount of gas generated during the initial reference performance test was measured using gas chromatography (gc agilent 7890b), and the results thereof are presented in Table 3 below.

[Table 3]

| | Capacity retention at 45°C (%) | Resistance increase rate at 45°C(%) | Gas generation (ml) |
|---|---|---|---|
| Example 1 | 92.3 | 23 | 0.12 |
| Example 2 | 90.8 | 27 | 0.27 |
| Example 3 | 89.8 | 31 | 0.44 |
| Comparative Example 1 | 86.2 | 49 | 0.47 |
| Comparative Example 2 | 87.5 | 42 | 0.50 |
| Comparative Example 3 | 83.1 | 68 | 0.67 |

Referring to Table 3, with respect to the secondary batteries respectively including the bimodal positive electrode active materials of Examples 1 to 3,since the breakage of the first lithium transition metal oxide (large particle) and the volume change due to charge and discharge were minimized and a size of fine powder generated by the breakage of the second lithium transition metal oxide (small particle) was increased to suppress an increase in specific surface area, reactivity with the electrolyte solution may be minimized, and thus, it may be confirmed that capacity retentions at high temperature were excellent, and resistance increase rates were not only significantly low, but amounts of gas generated were also small.

In contrast, with respect to Comparative Examples 1 and 3, since the crystal size of the first lithium transition metal oxide included in the bimodal positive electrode active material was larger than the crystal size of the second lithium transition metal oxide, it may be confirmed that resistance increase rates were large and life performances were poor in terms of the fact that a lot of cracks in the particle occurred due to a large volume change caused by the charge and discharge process. In addition, with respect to Comparative Examples 2 and 3, since the particle strength of the first lithium transition metal oxide included in the bimodal positive electrode active material was lower than the particle strength of the second lithium transition metal oxide, the breakage of the large particle occurred when the large particle collided with the small particle during an electrode rolling process, and thus, it may be confirmed that the increase in resistance was large.

## Claims

1. A bimodal positive electrode active material comprising a first lithium transition metal oxide and a second lithium transition metal oxide having an average particle diameter ($D_{50}$) smaller than that of the first lithium transition metal oxide,

   wherein the first lithium transition metal oxide has higher particle strength and smaller crystalline size than the second lithium transition metal oxide, and
   wherein the first lithium transition metal oxide and the second lithium transition metal oxide each independently have a composition represented by Formula 1:

   [Formula 1]       $Li_xNi_aCo_eM1_cM2_dO_2$

   wherein, in Formula 1,
   $M^1$ is at least one selected from manganese (Mn) and aluminum (Al),
   $M^2$ is at least one selected from tungsten (W), copper (Cu), iron (Fe), vanadium (V), chromium (Cr), titanium (Ti), zirconium (Zr), zinc (Zn), indium (In), tantalum (Ta), yttrium (Y), lanthanum (La), strontium (Sr), gallium (Ga), scandium (Sc), gadolinium (Gd), samarium (Sm), calcium (Ca), cerium (Ce), niobium (Nb), magnesium (Mg), boron (B), and molybdenum (Mo), and

   $$0.9 \leq x \leq 1.2, \ 0.7 \leq a < 1.0, \ 0 < b < 0.3, \ 0 < c < 0.3, \ and \ 0 \leq d \leq 0.1.$$

2. The bimodal positive electrode active material of claim 1, wherein a weight ratio of the first lithium transition metal oxide to the second lithium transition metal oxide is in a range of 60:40 to 95:5.

3. The bimodal positive electrode active material of claim 1, wherein a difference in the particle strength between the first lithium transition metal oxide and the second lithium transition metal oxide is in a range of 50 MPa to 200 MPa.

**4.** The bimodal positive electrode active material of claim 1, wherein a difference in the crystalline size between the first lithium transition metal oxide and the second lithium transition metal oxide is in a range of 50 nm to 150 nm.

**5.** The bimodal positive electrode active material of claim 1, wherein the first lithium transition metal oxide has a particle strength of 130 MPa to 300 MPa.

**6.** The bimodal positive electrode active material of claim 1, wherein the second lithium transition metal oxide has a particle strength of 70 MPa to 125 MPa.

**7.** The bimodal positive electrode active material of claim 1, wherein the first lithium transition metal oxide has a crystalline size of 80 nm to 140 nm.

**8.** The bimodal positive electrode active material of claim 1, wherein the second lithium transition metal oxide has a crystalline size of 150 nm to 200 nm.

**9.** A positive electrode comprising the bimodal positive electrode active material of claim 1.

**10.** A lithium secondary battery comprising the positive electrode of claim 9.

**Patentansprüche**

**1.** Bimodales Positivelektrodenaktivmaterial, umfassend ein erstes Lithium-Übergangsmetall-Oxid und ein zweites Lithium-Übergangsmetall-Oxid mit einem durchschnittlichen Partikeldurchmesser ($D_{50}$), der kleiner als der des ersten Lithium-Übergangsmetall-Oxids ist,

wobei das erste Lithium-Übergangsmetall-Oxid eine höhere Partikelfestigkeit und eine kleinere Kristallgröße als das zweite Lithium-Übergangsmetall-Oxid aufweist, und
wobei das erste Lithium-Übergangsmetall-Oxid und das zweite Lithium-Übergangsmetall-Oxid jeweils unabhängig voneinander eine Zusammensetzung, dargestellt durch Formel 1, aufweisen:

$$[\text{Formel 1}] \qquad Li_xNi_aCo_bM^1{}_cM_dO_2$$

wobei in Formel 1
$M^1$ mindestens eines, ausgewählt aus Mangan (Mn) und Aluminium (Al), ist,
$M^2$ mindestens eines, ausgewählt aus Wolfram (W), Kupfer (Cu), Eisen (Fe), Vanadium (V), Chrom (Cr), Titan (Ti), Zirkonium (Zr), Zink (Zn), Indium (In), Tantal (Ta), Yttrium (Y), Lanthan (La), Strontium (Sr), Gallium (Ga), Scandium (Sc), Gadolinium (Gd), Samarium (Sm), Calcium (Ca), Cer (Ce), Niob (Nb), Magnesium (Mg), Bor (B) und Molybdän (Mo), ist, und

$$0,9 \leq x \leq 1,2, \quad 0,7 \leq a < 1,0, \quad 0 < b < 0,3, \quad 0 < c < 0,3 \text{ und } 0 \leq d \leq 0,1.$$

**2.** Bimodales Positivelektrodenaktivmaterial gemäß Anspruch 1, wobei ein Gewichtsverhältnis von dem ersten Lithium-Übergangsmetall-Oxid zu dem zweiten Lithium-Übergangsmetall-Oxid im Bereich von 60:40 bis 95:5 liegt.

**3.** Bimodales Positivelektrodenaktivmaterial gemäß Anspruch 1, wobei eine Differenz in der Partikelfestigkeit zwischen dem ersten Lithium-Übergangsmetall-Oxid und dem zweiten Lithium-Übergangsmetall-Oxid im Bereich von 50 MPa bis 200 MPa liegt.

**4.** Bimodales Positivelektrodenaktivmaterial gemäß Anspruch 1, wobei eine Differenz in der Kristallgröße zwischen dem ersten Lithium-Übergangsmetall-Oxid und dem zweiten Lithium-Übergangsmetall-Oxid im Bereich von 50 nm bis 150 nm liegt.

**5.** Bimodales Positivelektrodenaktivmaterial gemäß Anspruch 1, wobei das erste Lithium-Übergangsmetall-Oxid eine Partikelfestigkeit von 130 MPa bis 300 MPa aufweist.

**6.** Bimodales Positivelektrodenaktivmaterial gemäß Anspruch 1, wobei das zweite Lithium-Übergangsmetall-Oxid eine Partikelfestigkeit von 70 MPa bis 125 MPa aufweist.

7. Bimodales Positivelektrodenaktivmaterial gemäß Anspruch 1, wobei das erste Lithium-Übergangsmetall-Oxid eine Kristallgröße von 80 nm bis 140 nm aufweist.

8. Bimodales Positivelektrodenaktivmaterial gemäß Anspruch 1, wobei das zweite Lithium-Übergangsmetall-Oxid eine Kristallgröße von 150 nm bis 200 nm aufweist.

9. Positive Elektrode, umfassend das bimodale Positivelektrodenaktivmaterial gemäß Anspruch 1.

10. Lithiumsekundärbatterie, umfassend die positive Elektrode gemäß Anspruch 9.

**Revendications**

1. Un matériau actif d'électrode positive bimodale comprenant un premier oxyde de métal de transition de lithium et un second oxyde de métal de transition de lithium ayant un diamètre moyen de particule ($D_{50}$) inférieur à celui du premier oxyde de métal de transition de lithium,

dans lequel le premier oxyde métallique de transition de lithium a une résistance particulaire plus élevée et une taille cristalline plus petite que le second oxyde métallique de transition de lithium, et
dans lequel le premier oxyde de transition métallique de lithium et le second oxyde de transition métallique de lithium ont chacun indépendamment une composition représentée par la formule 1 :

[Formule 1] $\qquad Li_xNi_aCo_bM^1_cM_dO_2$

dans laquelle, dans la formule 1,
$M^1$ est au moins l'un choisi parmi le manganèse (Mn) et l'aluminium (Al),
$M^2$ est au moins l'un choisi parmi le tungstène (W), le cuivre (Cu), le fer (Fe), le vanadium (V), le chrome (Cr), le titane (Ti), le zirconium (Zr), le zinc (Zn), l'indium (In), le tantale (Ta), l'yttrium (Y), lanthane (La), strontium (Sr), gallium (Ga), scandium (Sc), gadolinium (Gd), samarium (Sm), calcium (Ca), cérium (Ce), niobium (Nb), magnésium (Mg), bore (B) et molybdène (Mo), et

$$0,9 \leq x \leq 1,2, \quad 0,7 \leq a < 1,0, \quad 0 < b < 0,3, \quad 0 < c < 0,3, \quad et \quad 0 \leq d \leq 0,1.$$

2. Le matériau actif d'électrode positive bimodale de la revendication 1, dans lequel le rapport en poids entre le premier oxyde de métal de transition de lithium et le deuxième oxyde de métal de transition de lithium est dans un domaine de 60:40 à 95:5.

3. Le matériau actif d'électrode positive bimodale de la revendication 1, dans lequel la différence de résistance des particules entre le premier oxyde de métal de transition de lithium et le second oxyde de métal de transition de lithium est dans un domaine de 50 MPa à 200 MPa.

4. Le matériau actif d'électrode positive bimodale de la revendication 1, dans lequel la différence de taille cristalline entre le premier oxyde de métal de transition de lithium et le deuxième oxyde de métal de transition de lithium est dans un domaine de 50 nm à 150 nm.

5. Le matériau actif d'électrode positive bimodale de la revendication 1, dans lequel le premier oxyde de métal de transition du lithium a une résistance particulaire de 130 MPa à 300 MPa.

6. Le matériau actif d'électrode positive bimodale de la revendication 1, dans lequel le deuxième oxyde métallique de transition du lithium a une résistance particulaire de 70 MPa à 125 MPa.

7. Le matériau actif d'électrode positive bimodale de la revendication 1, dans lequel le premier oxyde de métal de transition du lithium a une taille cristalline comprise entre 80 nm et 140 nm.

8. Le matériau actif d'électrode positive bimodale de la revendication 1, dans lequel le deuxième oxyde métallique de transition du lithium a une taille cristalline de 150 nm à 200 nm.

9. Une électrode positive comprenant le matériau actif d'électrode positive bimodale de la revendication 1.

10. Une batterie secondaire au lithium comprenant l'électrode positive de la revendication 9.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20200044448 A
- US 2020388830 A1